# EUROPÄISCHE PATENTSCHRIFT

(11) **EP 1 008 442 B1**
(45) Veröffentlichungstag und Bekanntmachung des Hinweises auf die Patenterteilung: **22.02.2006**
(21) Anmeldenummer: 98811205.8
(22) Anmeldetag: 08.12.1998
(51) Int. Cl.: B32B 15/08, B32B 27/36, B65D 65/40

(54) **Sterilisierbarer Folienverbund für Verpackungszwecke**
Sterilizable multilayer film for packaging
Feuille multicouche stérilisable pour emballage

(43) Veröffentlichungstag der Anmeldung: 14.06.2000
(73) Patentinhaber: Alcan Technology & Management AG, 8212 Neuhausen am Rheinfall (CH); Mitsubishi Polyester Film GmbH, 65203 Wiesbaden (DE)
(72) Erfinder: Pfeiffer, Herbert, 55126 Mainz (DE); Lohwasser, Wolfgang, 78262 Gailingen (DE); Davis, Richard Lee, 65187 Wiesbaden (DE); Frei, Olaf, 8225 Siblingen (CH)

(56) Entgegenhaltungen:
- EP-A- 0 484 275
- US-A- 5 670 224
- US-A- 5 830 545
- DATABASE WPI Section Ch, Week 9325 Derwent Publications Ltd., London, GB; Class A25, AN 93-201537 XP002106435 & JP 05 128488 A (SONY CORP), 25. Mai 1993

## Beschreibung

Die Erfindung betrifft einen Folienverbund für Verpackungszwecke nach dem Oberbegriff von Anspruch 1, ein Verfahren zur Herstellung des Folienverbundes sowie dessen Verwendung.

Bei einem bekannten Verfahren zur Verlängerung der Haltbarkeit von verderblichen Produkten wie beispielsweise Lebensmittel wird eine Sterilisation im verpackten Zustand durchgeführt. Hierzu wird das Füllgut in seiner verschlossenen Verpackung in heissem Wasser oder Wasserdampf bei Temperaturen bis zu etwa 130°C im Autoklaven kurzzeitig erhitzt.

Die heute bekannten und zur Verpackung von Lebensmitteln eingesetzten transparenten Folienverbunde haben nach einer Sterilisierbehandlung oftmals eine ungenügende Wasserdampf, Sauerstoff- oder Aromabarriere. Ein Beispiel hierfür sind Polymere des Ethylvinyl-Alkohols (EVOH) und Copolymere von EVOH und Polyethylen (PE), deren Barriereeigenschaften insbesondere bei hoher Feuchte eine Verschlechterung zeigen und ein milchiges Aussehen aufweisen. Bessere Barriereeigenschaften ergeben sich durch Beschichtung einer mit Siliziummonoxid beschichteten Folie aus Polyethylenterephthalat (PET), jedoch zeigen diese Folien neben einer gelblichen Verfärbung insbesondere nach Sterilisation bei erhöhten Temperaturen eine Verminderung der Barriereeigenschaften.

Die EP-A-0 484 275 offenbart einen Folienverbund aus Polyester mit eines keramischen Schicht aus SiOₓ.

Aus JP-A-09 118 323 ist es bekannt, dass eine PET/PEN-Folie im Vergleich zu PET-Folien verbesserte Barriereeigenschaffen und eine bessere Stabilität nach eines Sterilisation aufweist.

Der Erfindung liegt die Aufgabe zugrunde, einen Folienverbund der eingangs genannten Art zu schaffen, der gegenüber transparenten Folienlaminaten nach dem Stand der Technik nach einer Sterilisierbehandlung verbesserte Barriereeigenschaften bezüglich Wasserdampf, Sauerstoff und Aromen aufweist.

Zur erfindungsgemässen Lösung der Aufgabe führt ein Folienverbund mit den Merkmalen von Ansprusch 1.

Unter PEN wird im folgenden sowohl das reine Polymer als auch ein Gemisch von Polymeren verstanden, das mindestens 60 Gew.% an Ethylen-2,6-naphthalat-Einheiten und bis zum 40 Gew.-% an Ethylen-terephthalat-Einheiten und/oder Einheiten aus cycloaliphatischen oder aromatischen Diolen und/oder Dicarbonsäuren enthält.

Bevorzugt wird eine PEN-Schicht, in der die Polymere mindestens 65 Gew.-% an Ethylen-2,6-naphthalat-Einheiten und bis zu 35 Gew.-% an Ethylen-terephthalat-Einheiten enthalten. Besonders bevorzugt wird eine PEN-Schicht, in der die Polymere mindestens 70 Gew.-% an Ethylen-2,6-naphthalat-Einheiten und bis zu 30 Gew.-% an Ethylen-terephthalat-Einheiten enthalten. Wie oben erwähnt kann die PEN-Schicht jedoch auch vollständig aus Ethylen-2,6-naphthalat-Polymeren bestehen.

Geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1.5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacethylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)Alkandisäuren besonders geeignet, wobei der Alkanteil geradkettig oder verzweigt sein kann.

Ein bevorzugtes Verfahren zur Herstellung der PEN/PET-Folie umfasst die folgenden Schritte:
a) Herstellen der Folie durch Coextrusion
b) Biaxiale Verstreckung der Folie und
c) Thermofixieren der verstreckten Folie.

Die PEN-Schicht kann ein- oder beidseits der PET-Folie angeordnet sein. Bevorzugt ist eine einseitige Anordnung der PEN-Schicht, wobei auf der der PEN-Schicht abgewandten Seite eine weitere Schicht aus PET angeordnet sein kann, die zusätzlich Antiblockmittel enthält.

Die PEN-Schicht weist bevorzugt eine Dicke von 0.2 bis 2 µm auf. Die bevorzugte Dicke der keramischen Schicht aus Al₂O₃ oder SiOₓ liegt zwischen etwa 40 und 150 nm.
Der letztlich für Verpackungszwecke eingesetzte Folienverbund enthält neben der mit Al₂O₃ oder SiOₓ beschichteten PEN/PET-Folie je nach Verwendungszweck weitere Folien, beispielsweise Folien aus PET oder aus einem orientierten Polyamid (oPA), oder der Folienverbund kann zur Steuerung der Siegeleigenschaften mit einer Siegelschicht aus beispielsweise Polypropylen (PP) oder Polyethylen (PE) beschichtet sein. Das Zusammenfügen der einzelnen Folien zu einem Folienverbund erfolgt bevorzugt mittels Kaschierklebern auf der Basis von Polyurethan.

Die keramischen Schichten mit SiOₓ können beispielsweise mit Verfahren der Vakuumdünnschicht-Technik auf der PEN/PET-Folie abgeschieden werden, wobei die keramische Schicht in jedem Fall als Grenzschicht auf der mit PEN beschichteten Seite der Folie angeordnet ist und mittels einer weiteren Folie bzw. von einem Kaschierkleber abgedeckt ist

Mittels eines an sich bekannten Vakuumdünnschichtverfahrens wird im Vakuum eine 10 nm bis 200 nm dicke keramische Schicht aus Al₂O₃ oder SiOₓ, wobei x eine Zahl zwischen 0.9 und 2 ist, niedergeschlagen. Die mit der keramischen Schicht beschichtete Folie wird sodann mit den weiteren Folien, die auch bedruckt sein können, zum Folienverbund kaschiert.

Das Beschichtungsverfahren wird über die Verdampfungsrate des zu verdampfenden Materials, die Abscheidungsrate auf dem Substrat und die Expositionsdauer des Substrats in der Vakuumkammeratmosphäre derart gesteuert, dass sich die gewünschte Schichtdicke für die SiOₓ-Beschichtung einstellt.

Bevorzugt wird Aluminium unter Zufuhr von Sauerstoff oder Siliziummonoxid (SiO), gegebenenfalls unter Zufuhr von Sauerstoff, verdampft. Die Schicht aus SiOₓ kann durch Plasmapolymerisation hergestellt werden.

Der erfindungsgemässe Folienverbund eignet sich insbesondere zur Herstellung flexibler Verpackungen wie Folienbeutel sowie als Deckelmaterial zum Aufsiegeln auf Behälter. Ein besonders bevorzugtes Einsatzgebiet liegt in der Verwendung des efindungsgemässen Folienverbundes zur Verpackung von Nahrungs- und Genussmitteln, die im verpackten Zustand im Wasserbad oder im Wasserdampf bei Temperaturen von mehr als 90°C sterilisiert werden.

Der erfindungsgemässe Folienverbund eignet sich auch als Barrierematerial im technischen und medizinischen Bereich.

## Patentansprüche

1. Folienverbund für Verpackungszwecke, mit guter Durchtrittssperrwirkung für Wasserdampf und Gase nach Sterilisation im Wasserbad oder im Wasserdampf bei Temperaturen von mehr als 90°C, wobei der Folienverbund eine durch Aufdampfen von anorganischen Materialien erzeugte Sperrschicht aufweist,
**dadurch gekennzeichnet, dass**
der Folienverbund eine Folie aus Polyethylenterephthalat (PET) mit einer 0.1 bis 4 µm dicken coextrudierten Schicht aus Polyethylen-2,6-naphthalat (PEN) auf mindestens einer Seite umfasst und die Folie auf der mindestens einen mit PEN beschichteten Seite eine im Vakuum erzeugte 10 nm bis 200 nm dicke keramische Schicht aus Al₂O₃ oder aus SiOₓ, wobei x eine Zahl zwischen 0.9 und 2 ist, aufweist.

2. Folienverbund nach Anspruch 1, **dadurch gekennzeichnet, dass** die PEN-Schicht eine Dicke von 0.2 bis 2 µm aufweist.

3. Folienverbund nach Anspruch 1 oder 2, **dadurch gekennzeichnet, dass** die keramische Schicht aus Al₂O₃ oder SiOₓ eine Dicke von 40 bis 150 nm aufweist.

4. Verfahren zur Herstellung eines Folienverbundes für Verpackungszwecke nach einem der Ansprüche 1 bis 3, wobei einzelne Folien zu dem Folienverbund kaschiert werden, **dadurch gekennzeichnet, dass** auf eine mindestens einseitig mit Polyethylen-2,6-naphthalat (PEN) einer Dicke von 0.1 bis 4 µm beschichteten Folie aus Polyethylenterephthalat (PET) auf der mindestens einen mit PEN beschichteten Seiten mittels eines Vakuumdünnschichtverfahrens eine keramische Schicht aus Al₂O₃ oder aus SiOₓ, wobei x eine Zahl zwischen 0.9 und 2 ist, niedergeschlagen und die mit der keramischen Schicht beschichtete Folie nachfolgend mit den weiteren Folien zum Folienverbund kaschiert wird.

5. Verfahren nach Anspruch 4, **dadurch gekennzeichnet, dass** Aluminium unter Zufuhr von Sauerstoff oder Siliziummonoxid (SiO), gegebenenfalls unter Zufuhr von Sauerstoff, verdampft wird.

6. Verfahren nach Anspruch 4 oder 5, **dadurch gekennzeichnet, dass** die Schicht aus SiOₓ durch Plasmapolymerisation hergestellt wird.

7. Verwendung eines Folienverbundes nach einem der Ansprüche 1 bis 3 in der Form von Beuteln und flexiblen Behälterdeckeln als sterilisierbare Verpackung für Nahrungs- und Genussmittel.

8. Verwendung eines Folienverbundes nach einem der Ansprüche 1 bis 3 als Barrierematerial im technischen und medizinischen Bereich.

## Claims

1. Film composite for packaging purposes, displaying a good barrier effect against the passage of water vapour and gases after sterilisation in a water bath or in steam at temperatures of more than 90°C, the film composite having a barrier layer produced by the vapour deposition of inorganic materials, **characterised in that** the film composite includes a film of polyethylene terephthalate (PET) with a 0.1 to 4 µm thick coextruded layer of polyethylene 2,6-naphthalate (PEN) on at least one side and the film is provided on the at least one side coated with PEN with a 10 nm to 200 nm thick ceramic layer of Al₂O₃ or SiOₓ, where x is a number between 0.9 and 2, produced in vacuo.

2. Film composite according to claim 1, **characterised in that** the PEN layer has a thickness of 0.2 to 2 µm.

3. Film composite according to claim 1 or claim 2, **characterised in that** the ceramic layer of Al₂O₃ or SiOₓ has a thickness of 40 to 150 nm.

4. Method of producing a film composite for packaging purposes according to one of claims 1 to 3, in which individual films are laminated to form the film composite, **characterised in that** a ceramic layer of Al₂O₃ or SiOₓ, where x is a number between 0.9 and 2, is deposited by means of thin-film vacuum deposition on a film of polyethylene terephthalate (PET) coated on at least one side with polyethylene 2,6-naphthalate (PEN) having a thickness of 0.1 to 4 µm, on the at least one side coated with PEN, and the film coated with the ceramic layer is then laminated with the other films to form the film composite.

5. Method according to claim 4, **characterised in that** aluminium is vaporised with the addition of oxygen or silicon monoxide (SiO), possibly with the addition of oxygen.

6. Method according to claim 4 or claim 5, **characterised in that** the layer of SiOₓ is produced by plasma polymerisation.

7. Use of a film composite according to one of claims 1 to 3 in the form of bags and flexible container lids as sterilisable packages for foodstuffs and allied products.

8. Use of a film composite according to one of claims 1 to 3 as a barrier material in the industrial and medical sectors.

## Revendications

1. Feuille multicouche à des fins d'emballage avec une bonne action de barrière au passage pour la vapeur d'eau et des gaz après stérilisation dans un bain d'eau ou dans de la vapeur d'eau à des températures supérieures à 90°C, la feuille composite présentant une couche barrière produite par évaporation de matériaux inorganiques,
**caractérisée en ce que** la feuille multicouche comprend une feuille de poly(éthylène téréphtalate) (PET) avec une couche coextrudée de poly(éthylène-2,6-naphtalate) (PEN) d'épaisseur 0,1 à 4 µm sur au moins un côté et la feuille présente sur le au moins un côté revêtu de PEN une couche céramique d'épaisseur 10 nm à 200 nm, produite sous vide, constituée de Al₂O₃ ou de SiOₓ, x étant un nombre compris entre 0,9 et 2.

2. Feuille multicouche selon la revendication 1, **caractérisée en ce que** la couche de PEN présente une épaisseur de 0,2 à 2 µm.

3. Feuille multicouche selon la revendication 1 ou 2, **caractérisée en ce que** la couche céramique constituée de Al₂O₃ ou de SiOₓ présente une épaisseur de 40 à 150 nm.

4. Procédé pour la préparation d'une feuille multicouche à des fins d'emballage selon l'une quelconque des revendications 1 à 3, des feuilles individuelles étant stratifiées en une feuille multicouche, **caractérisé en ce qu'**une couche céramique constituée de Al₂O₃ ou de SiOₓ, x étant un nombre compris entre 0,9 et 2, est déposée sur une feuille constituée de poly(éthylène téréphtalate) (PET), revêtue sur au moins un côté avec du poly(éthylène-2,6-naphtalate) (PEN) d'une épaisseur de 0,1 à 4 µm, sur le au moins un côté revêtu de PEN au moyen d'un procédé de couche mince sous vide et la feuille revêtue de la couche céramique est ensuite stratifiée avec les autres feuilles en une feuille multicouche.

5. Procédé selon la revendication 4, **caractérisé en ce que** l'on fait évaporer de l'aluminium en introduisant de l'oxygène ou du monoxyde de silicium (SiO), éventuellement en introduisant de l'oxygène.

6. Procédé selon la revendication 4 ou 5, **caractérisé en ce que** la couche de SiOₓ est préparée par polymérisation au plasma.

7. Utilisation d'une feuille multicouche selon l'une quelconque des revendications 1 à 3 dans la forme de sacs et de couvercles de récipients flexibles comme emballages stérilisables pour des denrées alimentaires et de luxe.

8. Utilisation d'une feuille multicouche selon l'une quelconque des revendications 1 à 3 comme matériau barrière dans des domaines techniques et médicaux.
